# EUROPEAN PATENT APPLICATION

(11) **EP 4 571 863 A1**
(43) Date of publication of application: **18.06.2025**
(21) Application number: 23216872.4
(22) Date of filing: 14.12.2023
(51) Int. Cl.: H01M 4/04, H01M 4/134, H01M 4/1395, H01M 4/36, H01M 4/38, H01M 10/052, H01M 10/0562, H01M 10/0565

(54) **METHOD OF METALATING AN ELECTRODE**

(71) Applicant: CUSTOMCELLS Holding GmbH, 25524 Itzehoe (DE)
(72) Inventor: Zimmermann, Jonathan, Itzehoe (DE)
(74) Representative: LKGLOBAL Lorenz & Kopf Patentanwalt Attorney at Law PartG mbB

(57) **Abstract**

The invention relates to a method (100) of metalating an electrode, in particular for an energy storage device. The method comprises providing a layer assembly. The layer assembly comprises an electrode, a first solid electrolyte layer on a first side of the electrode, and a first source layer on top of the first solid electrolyte layer. The first source layer comprises a first metal. The method further comprises metalating the electrode with the first metal by applying a pressure to the layer assembly.

## Description

### FIELD OF THE DISCLOSURE

The present disclosure relates to a method of metalating an electrode, in particular for an energy storage device.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode). Battery electrodes are conductive materials that serve as the positive and negative terminals in a battery.

Secondary batteries are based on the principle of moving metal ions as charge carriers from a cathode to an anode and vice versa. These secondary batteries experience a loss of these ions in the first charging step of the formation often referred to as first cycle efficiency. If left uncompensated the loss of metal ions causes a lower gravimetric and volumetric energy density and therefore worsens key characteristics of the secondary battery cell.

This loss is due to the formation of protective layers on the active material. These so-called SEI (solid electrolyte interface) are essential for the function of the cell as they prevent the penetration of electrolyte molecules into the anode material.

Accordingly, pre-metalation of the anodes has been proposed as a way to compensate for the consumption of metal ions in irreversible reactions during the formation of the solid electrolyte interface layer in the initial cycling. By introducing additional metal of the charge carrier species, the consumption of the solid electrolyte interphase may be compensated, leading to improved battery performance.

Conventional pre-lithiation techniques are known from e.g. US2021184208A1, EP2786441B1 or US11183683B2. However, such conventional techniques typically require the use of liquid electrolytes, which involve complex and energy-intensive drying processes. Moreover, the liquid electrolytes may contaminate the manufacturing line of the battery cell and produced parts of the cell.

Recently, research activities increasingly address the field of solid state batteries, comprising a solid-state prelithiation, cf. e.g.:
Pang, Y., Wang, X., Shi, X., Xu, F., Sun, L., Yang, J., Zheng, S., Solid-State Prelithiation Enables High-Performance Li-Al-H Anode for Solid-State Batteries. Adv. Energy Mater. 2020, 10, 1902795. https://doi.org/10.1002/aenm.201902795,
Lee, J., Jin, D., Kim, J.Y., Roh, Y., Lee, H., Kang, S.H., Choi, J., Jo, T., Lee, Y.-G. and Lee, Y.M. (2023), Dry Pre-Lithiation for Graphite-Silicon Diffusion-Dependent Electrode for All-Solid-State Battery. Adv. Energy Mater., 13: 2300172. https://doi.org/10.1002/aenm.202300172,
Ye, F., Liu, M., Zhang, X., Li, W., Pan, Z., Li, H., Zhang, S. and Zhang, Y. (2016), Prelithiation of Nanostructured Sulfur Cathode by an "On-Sheet" Solid-State Reaction. Small, 12: 4966-4972. https://doi.org/10.1002/smll.201600779, or cf. described in e.g. CN113451543A.

However, such known methods are highly complex and thus appear not suitable for a reliable and scalable prelithiation process.

### SUMMARY OF THE DISCLOSURE

Currently, it remains desirable to provide a method of metalating an electrode, wherein the metalation process becomes more reliable and allows production of electrodes with a higher energy density.

Therefore, the present disclosure relates to a method of metalating an electrode, in particular for an energy storage device. The method comprises providing a layer assembly. The layer assembly comprises an electrode, a first solid electrolyte layer on a first side of the electrode, and a first source layer on top of the first solid electrolyte layer. The first source layer comprises a first metal. The method further comprises metalating the electrode with the first metal by applying a pressure to the layer assembly.

Metalation may comprise or may mean pre-metalation, in particular pre-lithiation.

By applying a pressure, the layers can be brought into a tight contact and a spontaneous metalation process can be initiated, as explained in more detail below.

By providing such a method an electrode can be metalated in a reliable manner. As a consequence, the method is also scalable and thus suitable for a mass production. Moreover, the metalated electrode can have a relatively high energy density. In particular, the proposed dry metalation process of the present disclosure allows a more uniform and precise metalation (e.g. lithiation) of the electrode, providing the energy storage device with a higher energy density.

In contrast, conventional production scale processes for prelithiation of electrodes, that are known to solve large scale requirements, typically use a liquid electrolyte. However, the use of a liquid electrolyte results in a complex and expensive drying process of the electrode, which can lead to contamination and can even be dangerous due to the used lithium metal used in the electrolyte. Instead, the proposed method of the present disclosure does not require a liquid electrolyte and can thus be less expensive and safer.

Furthermore, the process can be realized as a roll-to-roll process. Accordingly, it may be possible to unroll the single layers, assembly the layers and wind up the layer assembly. Hence, an efficient and reliable contact between the source layer (donating the first metal, e.g. Lithium) and the electrode can be achieved in a simple and scalable manner.

The first source layer may be configured to donate the first metal. Hence, the first source layer may also be referred to as a sacrificial electrode.

The first source layer may be for example any kind of electrode that donate the first metal, in particular ions of the first metal, e.g. Lithium ions, as described in more detail below. The first source layer may be a normal battery electrode that contains the first metal or a Li-metal electrode, or a substrate layer or foil with a layer of the first metal on top (e.g. coated on the substrate layer).

The first source layer may be electrically conductive.

The electrode may be electrically conductive and may comprise a first electrode material being electrically conductive and being different from the first metal.

The first solid electrolyte layer may be permeable for metal ions of the first metal.

The metalated electrode may serve as an anode or as a cathode in an energy storage device.

The method may further comprise electrically connecting the first source layer to the electrode by means of a first current control unit during metalation of the electrode.

The first current control unit may be or may comprise a variable resistor.

For example, an electrical current and/or voltage between the first source layer and the electrode may be controlled by means of the first current control unit.

The electrode is metalated by causing a flow of metal ions of the first metal into the electrode, while controlling an electrical current between the first source layer and the electrode by means of the first current control unit.

By providing such a method, the process of metalation of the electrode can be optimized for an energy storage device e.g. a secondary battery or a metal ion capacitor. In particular, the metalation rate can be increased and at the same time can be better controlled, as explained in the following description in more detail. Hence, the metalation process becomes faster and more reliable.

Accordingly, it becomes possible to add metal ions to the electrode based on the migration of metal ions (e. g. Li+, Na+, K+, Mg2+, Ca2+, Al3+) before the first charge in order to increase the capacity and lifetime of the final battery cell.

Furthermore, the loss of these ions due to side reactions, e. g. the formation of protective layers on the active material (i. e. the SEI), can be compensated for by introducing additional metal ions into the battery electrode (e. g. the anode) using e.g. a wet chemical process (i. e. by exposing the electrode to the agent) prior to cell assembly. Through this compensation, the usable capacity of the final battery cell can be increased.

In addition, a reservoir of ions can be created that can be consumed over the life of the battery cell, improving the cycling stability of the battery cell.

A metalation rate of the electrode may be controlled by controlling the electrical current between the first source layer and the electrode by means of the first current control unit.

Accordingly, in method of the present disclosure the external shorting (i.e. controlling the electrical current via the current control unit) gives a simple means of controlling the pre-lithiation rate. In contrast, conventional uncontrolled local high reaction rates can cause uneven pre-lithiation degrading the overall product quality, and can generate hardly controllable local heat.

The layer assembly may be metalated without applying an external voltage between the electrode and the first source layer. Accordingly, the metalation reaction can be spontaneous and does not require any external electric input. The pre-metalation (e.g. lithiation) rate can be conveniently controlled by varying the current control unit, e.g. a resistance of a short circuit.

The current control unit may merely serve as a variable resistor for reducing a current which is due to the metalation process.

It is however also possible to use an external voltage in the current control unit, in case an acceleration of the metalation rate is desired (as long as the layer assembly is not too much heated).

The electrode may comprise a first contact point, such as a tab of the electrode, protruding from the layer assembly on one side of the layer assembly, and the first source layer may comprise a second contact point, such as a tab of the first source layer, protruding from the layer assembly on another side of the layer assembly, and controlling an electrical current and/or voltage between the first contact point and the second contact point by means of the first current control unit.

Accordingly, contact tabs of the electrode and the first source layer may be used as contact points for the current control unit.

Alternatively, the current control unit may be contacted to one or two coils (e.g. their center pins), since such coils may be in electrical contact with the wound up layer. For example, an electrode coil which supplies the electrode for the layer assembly may be contacted, and/or a source layer coil which supplies the source layer for the layer assembly.

Also a coil, on which the layer assembly is wound up, may be used as a contact point.

The method may thus further comprise: winding up the layer assembly on a roll, wherein the electrode or the first source layer may be electrically connected to the roll, and controlling an electrical current and/or voltage between the roll and the electrode or the first source layer, optionally of a contact point of the electrode or the first source layer, by means of the first current control unit.

The roll may consist of a hollow cylinder, which forms a center pin of an electrode coil. Accordingly, once the electrode foil is wound up on the center pin (i.e. the roll) the assembly of wound-up electrode and pin may form an electrode coil.

Metalating the layer assembly and/or applying a pressure to the layer assembly may be performed for a predetermined time.

The pressure may be a predefined pressure.

The pressure may be at least partially generated by at least one of: winding up the layer assembly on a roll, optionally during applying a predefined tensile force to the layer assembly,
calendaring the layer assembly, and
arranging the layer assembly as a stack of layer assemblies and applying a pressure to the stack.

Accordingly, the layer assembly, to which the predefined tensile force is applied, may receive a (accordingly predefined) pressure due to the deflection. Therefore, by controlling the tensile force (which may thus be predefined) the amount of pressure may be precisely controlled. In one example, the deflection may be realized by rolling up the layer assembly as described below.

Tensile force may be understood as e.g. a type of force that occurs when the layer assembly is pulled apart. Tensile force may be the force that may be required to stretch or elongate the layer assembly. The magnitude of tensile force applied to the layer assembly may determine its ability to withstand stretching or deformation without breaking. Tensile force may also be called web tension. The amount of tensile force may be chosen such that the layer assembly can withstand the tensile force without deforming the layer assembly plastically (i.e. irreversibly, e.g. such that the layer assembly cannot get back to its original form).

The term "predefined" may be used to describe a parameter, such as pressure or tensile force, that has already been set up or defined before it is used or applied. "Predefined" may refer to a set of instructions, values, or settings that may have already been established and are ready to be used. Another term for "predefined" may be "predetermined".

The magnitude of the pressure may be controlled by the applied tensile force. For example, when winding up the layer assembly on a coil, the applied tensile force may be controlled as a function of the number of coil turns (or number or amount of revolutions of the coil), e.g. such that the pressure remains similar across the complete wound layer assembly. The tensile force may e.g. increase as a function of an increasing number of coil turns (or number of revolutions of the coil).

The method according to any one of the preceding claims, further may comprise: removing the metalated electrode from the first solid electrolyte layer and/or the first source layer.

The electrode may be removed and used in an energy storage device.

The solid electrolyte layer may comprise at least one of:
a solid polymer electrolyte (SPE),
a polyethylene oxide (PEO) with a lithium salt, such as Lithium bis(trifluoromethanesulfonyl)imide (LiTFSI), and
a binder and/or an inorganic compound,
wherein the binder may comprise optionally at least one of Polyvinylidene fluoride (PVDF) or Polytetrafluoroethylene (PTFE), and/or the inorganic compound may comprise optionally at least one of lithium phosphorus oxynitride (LiPON), Li₁₀GeP₂S12 (LGPS) or Li₇La₃Zr₂O₁₂ (LLZO).

The electrolyte layer may be solid or solid like including gel-like electrolytes, for example optionally also SPE gels and other quasi solid-state electrolytes. It is merely desirable that the electrolyte layer can be removed from the electrode after the metalation process, in particular without an extra drying process, as in the case of conventional agent based liquid electrolytes. This is also possible with the mentioned solid like electrolytes.

The electrode may comprise a current collector layer (i.e. a substrate foil of the electrode serving as a current collector, e.g. made of CU oder AL) and a first electrode layer on top of the current collector layer.

The first electrode layer may comprise the electrode material.

The current collector layer may comprise a metal that may be different from the electrode material.

The first solid electrolyte layer may be on top of the first electrode layer.

The electrode may be metalated by causing a flow of metal ions of the first metal into the first electrode layer.

The first source layer may comprise a first metal layer and a first substrate layer, the first metal layer being on top of the first solid electrolyte layer, the first substrate layer being on top of the first metal layer.

The first metal layer may comprise the first metal and the first substrate layer may comprise a metal different from the first metal.

The provided layer assembly may further comprise:
a second solid electrolyte layer on a second side of the electrode, and
a second source layer on top of the first second electrolyte layer, the second source layer may comprise the first metal.

All preceding method steps may be similarly performed for the second solid electrolyte layer and the second source layer, in correspondence to the first solid electrolyte layer and the first source layer.

The present disclosure further relates to a method of manufacturing an energy storage device, such as a battery cell, comprising a method according to any one of the preceding aspects of the present disclosure.

The energy storage device of the present disclosure may also be any other type, e.g. a super capacitor.

The layer assembly may comprise a first protection foil, which may be arranged on a side of the first source layer facing away from the electrode.

The method may further comprise removing the first protection foil, optionally before or after metalating the electrode.

In case the first protection foil is removed before metalation, a separation layer may be arranged on the layer assembly before metalation.

The method may further comprise: dividing the metalated electrode into electrode sheets.

The present disclosure may further relate to a layer assembly comprising an at least partially metalated electrode, a solid electrolyte layer and a first source layer, wherein the layer assembly may be wound up on a roll under a predefined tensile force.

The present disclosure may further relate to a metalated electrode obtained by: unrolling the layer assembly and optionally removing the first solid electrolyte layer and/or the first source layer from the metalated electrode as described above, or a method as described above.

The present disclosure may further relate to a battery cell, may comprise a metalated electrode as described above.

### BRIEF DESCRIPTION OF THE DRAWINGS

Fig. 1 shows a flowchart of a method of metalating an electrode according to a first example of the disclosure.
Fig. 2 shows a manufacturing line for metalating an electrode according to a second example of the disclosure in a schematic side view.
Fig. 3 shows the manufacturing line for metalating an electrode according to the second example of the disclosure in a schematic side view.
Fig. 4 shows a manufacturing line for metalating an electrode according to a third example of the disclosure in a schematic side view.
Fig. 5 shows part of a layer assembly used in a method of metalating an electrode according to a fourth example of the disclosure in a section view, schematically showing the metalation process according to examples of the present disclosure.
Fig. 6 shows part of a layer assembly used in a method of metalating an electrode according to a fifth example of the disclosure in a section view show, schematically showing the metalation process according to examples of the present disclosure.

### DESCRIPTION OF THE DRAWINGS

Reference will now be made in detail to examples of the disclosure, examples of which are illustrated in the accompanying drawings. Wherever possible, the same reference numerals will be used throughout the drawings to refer to the same or like parts. Thus, a description of a part given in relation to one drawing also applies to other drawings, avoiding a repetitive description. Furthermore, individual features described in connection with one example can also be used separately in other examples.

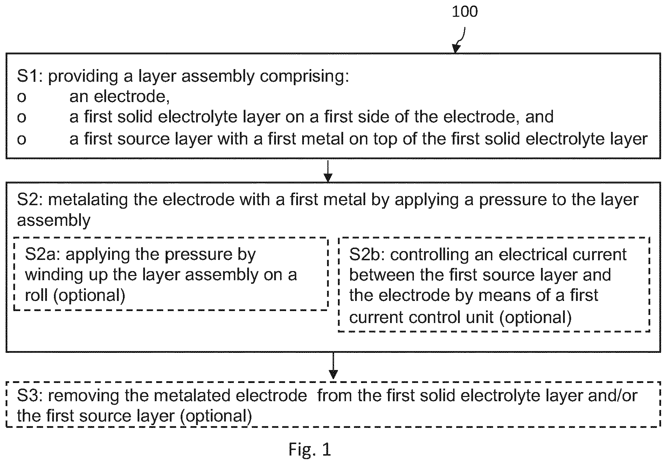

Fig. 1 shows a flowchart of a method 100 of metalating an electrode, wherein the method comprises a first step S1 of providing a layer assembly, the layer assembly comprising an electrode, a first solid electrolyte layer on a first side of the electrode and a first source layer on top of the first solid electrolyte layer, the first source layer comprising a first metal. For example, each layer may be provided by unrolling a respective coil on which the respective layer is wound. The layers may be brought into contact and optionally initially pressed together, e.g. in a prior calendaring step (not shown in fig. 1). In this way, the layer assembly may be provided.

The method 100 further comprises a step S2 of metalating the electrode with the first metal by applying a pressure to the layer assembly. The metalating step or metalating process may also be referred to as a conditioning step or conditioning process.

Step S2 may in particular comprises an optional step S2a of winding up the layer assembly on a roll, in order to apply the pressure to the layer assembly. Alternatively or additionally, the pressure may be applied by calendaring the layer assembly (as mentioned above in context of step S1), and/or by arranging the layer assembly as a stack of layer assemblies and applying a pressure to the stack.

Step S2 further comprises an optional step S2b of controlling an electrical current and/or voltage between the roll and the electrode or the first source layer by means of the first current control unit. For this purpose, the electrode and the first source layer may be electrically connected to the first current control unit, as described in more detail in context of the subsequent figures. Step S2a may in particular comprise causing a flow of metal ions of the first metal into the electrode, while controlling an electrical current between the first source layer and the electrode by means of the first current control unit.

For example, the layer assembly may be wound on a coil and may be kept in this wound up state during a predetermined time. During this time, the pressure may be applied to the layer assembly due to the wound up state and simultaneously the flow of metal ions (i.e. the actual metalation process of the electrode) may be controlled by the current control unit.

The method 100 may further comprise an optional step S3 of removing the metalated electrode from the first solid electrolyte layer and/or the first source layer. For example, the layer assemble may be unrolled and the layers may be separated from each other.

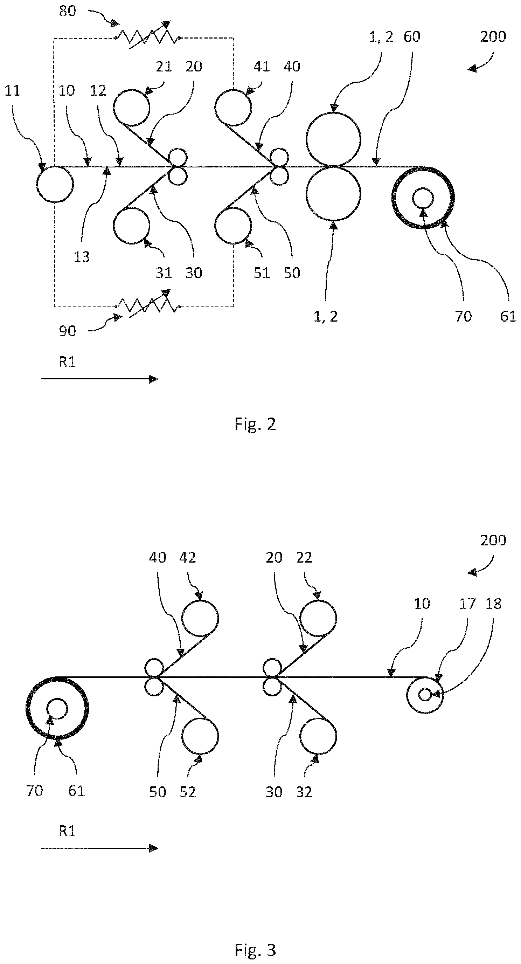

Fig. 2 shows a manufacturing line 200 for metalating an electrode 10 according to a second example of the disclosure in a schematic side view. The second example may be based on or correspond to the first example. Figs. 2 to 4 show examples of a roll-to-roll process according to the present disclosure.

Particularly, Fig. 2 shows a first part of the manufacturing line 200, showing a layer assembly 60 being manufactured and wound up to a layer assembly coil 61.

The manufacturing line 200 comprises a supplying electrode coil 11 for supplying and conveying an electrode 10 in conveying direction R1. The manufacturing line 200 further comprises a first solid electrolyte coil 21 for supplying a first solid electrolyte layer 20, wherein the first solid electrolyte layer 20 is arranged on a first side 12 of the electrode 10.

The manufacturing line 200 further optionally comprises a second solid electrolyte coil 31 for supplying a second solid electrolyte layer 30, wherein the second solid electrolyte layer 30 is arranged on a second side 13 of the electrode 10. The first side 12 of the electrode 10 is arranged opposite to the second side 13 of the electrode 10.

The manufacturing line 200 further comprises a first source layer coil 41 for providing a first source layer 40, wherein the first source layer 40 is arranged on top of the first solid electrolyte layer 20. The manufacturing line 200 further optionally comprises a second source layer coil 51 for providing a second source layer 50, wherein the second source layer 50 is arranged on top of the second solid electrolyte layer 30.

The first source layer coil 41 is arranged after the first solid electrolyte layer coil 21 in conveying direction R1 and optionally the second source layer coil 51 is arranged after the second solid electrolyte layer coil 31 in conveying direction R1.

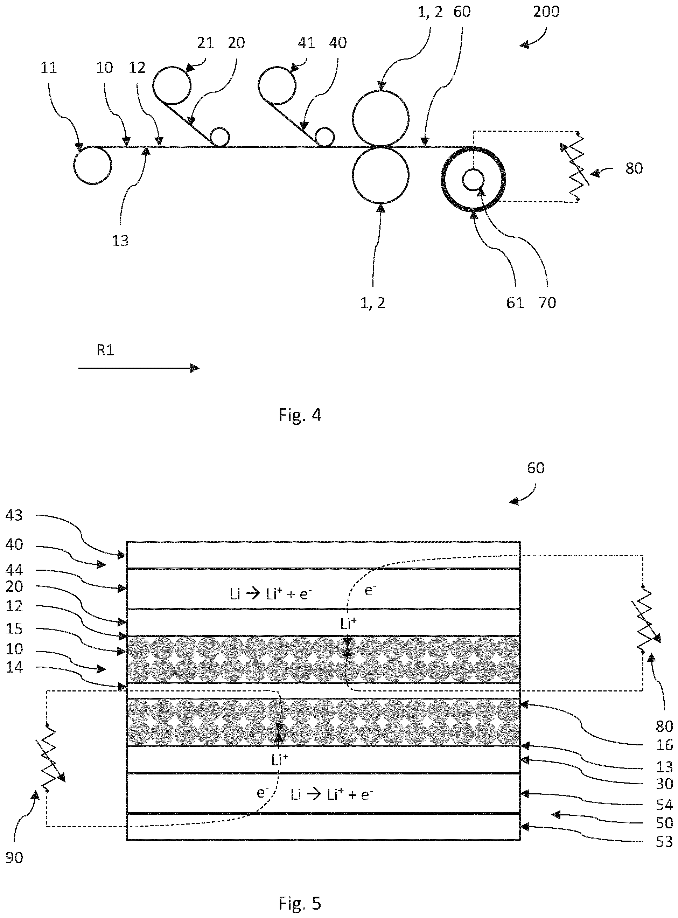

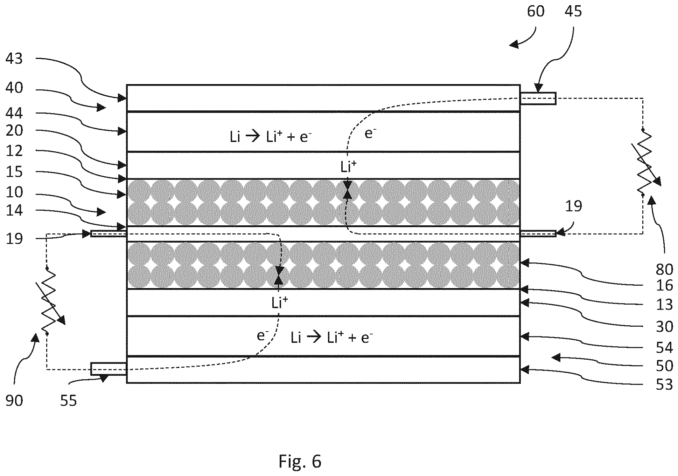

Thus, the electrode 10, the first solid electrolyte layer 20, the second optional solid electrolyte layer 30, the first source layer 40, the second optional source layer 50 and the electrode form a layer assembly 60, as also shown in fig. 5 and 6.

The manufacturing line 200 further comprises a pressure application device 1 comprising two calendar rollers 2 for applying an in initial pressure on the layer assembly 60 and contacting the layers of the layer assembly 60 to each other.

The manufacturing line 200 further comprises a layer assembly roll 70 for winding up the layer assembly 60 to the layer assembly coil 61 and thereby applying an pressure on the layer assembly that persists for a predetermined time (i.a., as long as the layer assembly is wound up). In particular, the layer assembly may be wound up on a roll under a predefined tensile force.

The manufacturing line 200 further comprises a first current control unit 80 and a second current control unit 90.

The first current control unit 80 is connected with a first electric terminal to the supplying electrode coil 11 (e.g. a center pin of the coil, not shown in the figure), which supplies the electrode 10 for the layer assembly 60 and with a second electric terminal to the first source layer coil 41 (e.g. a center pin of the coil, not shown in the figure) which supplies the first source layer 40 for the layer assembly 60. Thus, the first source layer 40 is electrically connected to the electrode 10 by means of the first current control unit 80. In this way, an electrical connection between the electrode 10 and the first source layer 40 can be established even before the electrode 10 and the first source layer 40 are contacted to each other, e.g. before calendaring.

Likewise, the second current control unit 90 is connected to the supplying electrode coil 11, which supplies the electrode 10 for the layer assembly 60 and to the second source layer coil 51 which supplies the second source layer 50 for the layer assembly 60. Thus, the second source layer 50 is electrically connected to the electrode 10 by means of the second current control unit 90. In this way, an electrical connection between the electrode 10 and the second source layer 50 can be established even before the electrode 10 and the second source layer 50 are contacted to each other, e.g. before calendaring.

Fig. 3 shows the manufacturing line 200 for metalating an electrode 10 according to the second example of the disclosure in a schematic side view. Particularly, Fig. 3 shows a second part of the manufacturing line 200, showing the electrode 10 being removed from the first and second source layer 40, 50 and the first and second solid electrolyte layer 20, 30.

The manufacturing line 200 comprises a layer assembly roll 70 for conveying the layer assembly 60, particularly after a metalating process of the electrode 10 of the layer assembly 60, in conveying direction R1 by unwinding the layer assembly coil 61. The manufacturing line 200 further comprises a first source layer roll 42 for winding up the removed first source layer 40 from the layer assembly 60 and a second source layer roll 52 for winding up the removed second source layer 50 from the layer assembly 60. The manufacturing line 200 further comprises a first solid electrolyte roll 22 for winding up the removed first solid electrolyte layer 20 from the layer assembly 60 and a second solid electrolyte roll 32 for winding up the removed second solid electrolyte layer 30 from the assembly layer 60.

The manufacturing line 200 further comprises an electrode roll 18 for winding up the metalated electrode 10 to a metalated electrode coil 17.

Fig. 4 shows a manufacturing line 200 for metalating an electrode according to a third example of the disclosure in a schematic side view. Particularly, Fig. 4 shows a first part of the manufacturing line 200, showing a layer assembly 60 being manufactured and wound up to a layer assembly coil 61.

Generally, the manufacturing line 200 may be based on or correspond to the second example.

However, in this example the layer assembly may only comprise the electrode 10, the first solid electrolyte layer 20 and the first source layer 40.

moreover, the manufacturing line 200 may only comprise a first current control unit 80 connected with a first terminal to the layer assembly roll 70 (i.e. its center pin) and thus to the electrode 10 which is in electric contact with the center pin of the roll 70. The first current control unit 80 is further connected with a second terminal to the first source layer 40, for example to a contact tab of the first source layer 40 which protrudes on one side of the wound-up layer assembly. The contact terminal may be attached to the contact tab after winding up the layer assembly. It is also possible to use a sliding contact terminal which allows a contact already during winding.

In this way, an electrical connection between the layer assembly roll 70 and the first source layer 40 or the electrode 10 is established, particularly when the layer assembly is wound up to the layer assembly roll 70. In other words, the electrical connection between the layer assembly roll 70 and the electrode 10 or the first source layer 40 can be established after the layer assembly 60 is wound up to the layer assembly roll 70.

Alternatively, also the electrode may be contacted via a contact terminal of the electrode, which desirably protrudes the wound-up layer assembly on an opposite side than the contact tab of the first source layer.

Fig. 5 shows part of a layer assembly 60 used in a method 100 of metalating an electrode 10 according to a fourth example of the disclosure in a section view schematically showing the metalation process according to examples of the present disclosure (e.g. a metalating process, as it may take place on the layer assembly coil 61 in fig. 2 or 4).

In this example the electrode 10 may be referred to as an anode 10, the first metal layer 44 may be referred to as a first lithium layer 44 and the second metal layer 54 may be referred to as a second lithium layer 54. However, also other options are possible, as described in the present disclosure.

The present disclosure provides a method to pre-lithiate Li-ion battery electrodes in a roll-to-roll electrochemical process using one or more lithium layers deposited onto one or more substrate layers.

The process takes advantage of the spontaneity of the reaction between Li metal and Li-ion battery electrodes. Thus, the electrochemical process does not require any electricity input. Oppositely, a current control unit (e.g. simplified as variable resistor) can be used to limit the current flow and control the rate of the pre-lithiation.

The layer assembly 60 comprises an electrode 10 at its center, wherein the electrode 10 comprises a current collector layer 14, such as a copper foil or an aluminum foil, and a first electrode layer 15 and second electrode layer 16 arranged on opposite sides of the current collector layer 14 sandwiching the current collector layer 14 in between them.

The layer assembly 60 further comprises a first solid electrolyte layer 20 arranged on a first side 12 of the electrode 10 and a second solid electrolyte layer 30 arranged on a second
further comprises a first source layer 40 arranged on the first solid electrolyte layer 20 such that the first solid electrolyte layer 20 is arranged between the first source layer 40 and the electrode 10 separating them from each other. The layer assembly 60 further comprises a second source layer 50 arranged on the second solid electrolyte layer 30 such that the second solid electrolyte layer 30 is arranged between the second source layer 50 and the electrode 10 separating them from each other.

The first source layer 40 comprises a first substrate layer 43 and a first metal layer 44, wherein the first metal layer 44 is in direct surface contact with the first solid electrolyte layer 20. The second source layer 50 comprises a second substrate layer 53 and a second metal layer 54, wherein the second metal layer 54 is in direct surface contact with the first solid electrolyte layer 30. The first substrate layer 43 and the second substrate layer 53 are a metal layer different from lithium.

The current collector layer 14 of the electrode 10 is electrically connected with the first substrate layer 43 of the first source layer 40 by means of the first current control unit 80. The current collector layer 14 of the electrode 10 is electrically connected with the second substrate layer 53 of the second source layer 50 by means of the second current control unit 90.

Due to the direct surface contact between the first metal layer 44 of the first source layer 40 and the first solid electrolyte layer 20, the lithium metal of the first metal layer 44 oxidizes and liberates a lithium ion Li+ and an electron e-. The first solid electrolyte layer 20 allows the lithium ion Li+ to pass through the first solid electrolyte layer 20 to reach the first electrode layer 15 of the electrode 10. Lithium ions Li+ from the first solid electrolyte layer 10 reduce the first electrode layer 15 of the electrode 10 forming a lithiated electrode 10. At the same time, the liberate electron e- is transferred in a controlled current by the external circuit of the first current control unit 80 to be supplied for reducing the first electrode layer 15.

Thus, a metalation rate may be controlled by controlling the electrical current between the first source layer 40 and the electrode 10 by means of the first current control unit 80.

The same metalation process takes place between the second source layer 50 and the electrode 10 using the second current control unit 90 as electrical connection between the second source layer 50 and the electrode 10.

Fig. 6 shows part of a layer assembly 60 used in a method 100 of metalating an electrode 10 according to a fifth example of the disclosure in a section view showing the metalation process according to examples of the present disclosure.

The fifth example may be based on or correspond to the fourth example.

The layer assembly 60 is rolled to a layer assembly coil 61. The electrode 10 comprises two first contact points 19, such as first tabs 19 of the electrode 10, protruding from the layer assembly 60, one on each side of the layer assembly 60. The first source layer 40 comprises a second contact point 45, such as a second tab 45 of the first source layer 40, protruding from on one side of the layer assembly 60 and the second source layer 50 comprises a third contact point 55, such as a third tab 55, protruding from the opposite side of the layer assembly 60.

The first contact points 19 of the electrode 10 are connected to the current collector layer 14 of the electrode 10. The second contact point 45 of the first source layer 40 is connected to the first substrate layer 43 of the first source layer 40. The third contact point 55 of the second source layer 50 is connected to the second substrate layer 53 of the second source layer 50.

One first contact point 19 of the electrode 10 and the second contact point 45 are electrically connected by means of the first current control unit 80. The other first contact point 19 of the electrode 10 and the third contact point 55 are electrically connected by means of the second current control unit 90.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

### LIST OF REFERENCE NUMERALS

- 1: pressure application device
- 2: calendar roller
- 10: electrode
- 11: supplying electrode coil
- 12: first side (of the electrode)
- 13: second side (of the electrode)
- 14: current collector layer (of the electrode)
- 15: first electrode layer (of the electrode)
- 16: second electrode layer (of the electrode)
- 17: (metalated) electrode coil
- 18: electrode roll
- 19: first contact point / first tab
- 20: first solid electrolyte layer
- 21: first solid electrolyte layer coil
- 22: first solid electrolyte layer roll
- 30: second solid electrolyte layer
- 31: second solid electrolyte layer coil
- 32: second solid electrolyte layer roll
- 40: first source layer
- 41: first source layer coil
- 42: first source layer roll
- 43: first substrate layer (of the first source layer)
- 44: first metal layer / first lithium layer (of the first source layer)
- 45: second contact point / second tab
- 50: second source layer
- 51: second source layer coil
- 52: second source layer roll
- 53: second substrate layer (of the second source layer)
- 54: second metal layer / second lithium layer (of the second source layer)
- 55: third contact point / third tab
- 60: layer assembly
- 61: layer assembly coil
- 70: layer assembly roll
- 80: first current control unit
- 90: second current control unit

- 100: method of metalating an electrode
- 200: manufacturing line for metalating an electrode

- R1: conveying direction

## Claims

1. A method of metalating an electrode, the method comprising:
providing a layer assembly comprising:
∘ an electrode,
∘ a first solid electrolyte layer on a first side of the electrode, and
∘ a first source layer on top of the first solid electrolyte layer, the first source layer comprising a first metal, and
metalating the electrode with the first metal by applying a pressure to the layer assembly.

2. The method of claim 1, further comprising:
electrically connecting the first source layer to the electrode by means of a first current control unit during metalation of the electrode, and
optionally controlling an electrical current and/or voltage between the first source layer and the electrode by means of the first current control unit.

3. The method of claim 2, wherein
the electrode is metalated by:
• causing a flow of metal ions of the first metal into the electrode,
• while controlling an electrical current between the first source layer and the electrode by means of the first current control unit.

4. The method of claim 2 or 3, wherein
a metalation rate of the electrode is controlled by controlling the electrical current between the first source layer and the electrode by means of the first current control unit.

5. The method according to any one of the preceding claims, wherein
wherein the layer assembly is metalated without applying an external voltage between the electrode and the first source layer.

6. The method according to any one of the claims 2 to 5, wherein
the electrode comprises a first contact point, such as a tab of the electrode, protruding from the layer assembly on one side of the layer assembly, and the first source layer comprises a second contact point, such as a tab of the first source layer, protruding from the layer assembly on another side of the layer assembly, and
controlling an electrical current and/or voltage between the first contact point and the second contact point by means of the first current control unit.

7. The method according to any one of the claims 2 to 6, further comprising:
winding up the layer assembly on a roll, wherein the electrode or the first source layer is electrically connected to the roll, and
controlling an electrical current and/or voltage between the roll and the electrode or the first source layer, optionally of a contact point of the electrode or the first source layer, by means of the first current control unit.

8. The method according to any one of the preceding claims, wherein metalating the layer assembly and/or applying a pressure to the layer assembly is performed for a predetermined time.

9. The method according to any one of the preceding claims, wherein the pressure is a predefined pressure, and/or
the pressure is at least partially generated by at least one of:
winding up the layer assembly on a roll, optionally during applying a predefined tensile force to the layer assembly,
calendaring the layer assembly, and
arranging the layer assembly as a stack of layer assemblies and applying a pressure to the stack.

10. The method according to any one of the preceding claims, further comprising: removing the metalated electrode from the first solid electrolyte layer and/or the first source layer.

11. The method according to any one of the preceding claims, wherein
the solid electrolyte layer comprises at least one of:
a solid polymer electrolyte (SPE),
a polyethylene oxide (PEO) with a lithium salt, such as Lithium bis(trifluoromethanesulfonyl)imide (LiTFSI), and
a binder and/or an inorganic compound,
wherein the binder comprises optionally at least one of Polyvinylidene fluoride (PVDF) or Polytetrafluoroethylene (PTFE), and/or the inorganic compound comprises optionally at least one of lithium phosphorus oxynitride (LiPON), Li₁₀GeP₂S12 (LGPS) or Li₇La₃Zr₂O₁₂ (LLZO).

12. The method according to any one of the preceding claims 2 to 11, wherein
the electrode comprises a current collector layer and a first electrode layer on top of the current collector layer,
wherein the first electrode layer comprises the electrode material, wherein the current collector layer comprises a metal that is different from the electrode material,
wherein the first solid electrolyte layer is on top of the first electrode layer, and wherein
the electrode is metalated by:
• causing a flow of metal ions of the first metal into the first electrode layer.

13. The method according to any one of the preceding claims, wherein
wherein the first source layer comprises a first metal layer and a first substrate layer, the first metal layer being on top of the first solid electrolyte layer, the first substrate layer being on top of the first metal layer, the first metal layer comprising the first metal, the first substrate layer comprising a metal different from the first metal.

14. The method according to any one of the preceding claims, wherein
the provided layer assembly further comprises:
• a second solid electrolyte layer on a second side of the electrode, and
• a second source layer on top of the first second electrolyte layer, the second source layer comprising the first metal.

15. A method of manufacturing an energy storage device, such as a battery cell, comprising a method according to any one of the preceding claims.
